# EUROPEAN PATENT SPECIFICATION

(11) **EP 3 651 412 B1**
(45) Date of publication and mention of the grant of the patent: **07.12.2022**
(21) Application number: 17916879.4
(22) Date of filing: 05.07.2017
(51) Int. Cl.: H04L 41/0663, H04L 45/02, H04L 45/28, H04L 45/64, H04L 65/40, H04L 45/58

(54) **SDN MULTI-DOMAIN NETWORK BACKUP METHOD AND SYSTEM BASED ON DUAL-PORT SWITCH**
SDN-MULTIDOMÄNEN-NETZWERK-SICHERUNGSVERFAHREN UND SYSTEM AUF DER GRUNDLAGE EINES DUAL-PORT-SCHALTERS
PROCÉDÉ ET SYSTÈME DE SAUVEGARDE DE RÉSEAU MULTI-DOMAINE SDN BASÉS SUR UN COMMUTATEUR À DOUBLE PORT

(43) Date of publication of application: 13.05.2020
(73) Proprietor: Global Energy Interconnection Research Institute Co., Ltd, Beijing 102211 (CN); State Grid Corporation of China, Beijing 100031 (CN); State Grid Shanghai Municipal Electric Power Company, Shanghai 200002 (CN)
(72) Inventor: LIU, Chuan, Nanjing Jiangsu 210003 (CN); HUANG, Hui, Nanjing Jiangsu 210003 (CN); ZHANG, Gang, Nanjing Jiangsu 210003 (CN); GUO, Jinghong, Nanjing Jiangsu 210003 (CN); LIANG, Yun, Nanjing Jiangsu 210003 (CN); HUANG, Zaichao, Nanjing Jiangsu 210003 (CN); YU, Qiang, Nanjing Jiangsu 210003 (CN); YU, Yue, Nanjing Jiangsu 210003 (CN); LOU, Zheng, Nanjing Jiangsu 210003 (CN); CHEN, Lei, Nanjing Jiangsu 210003 (CN); TAO, Jing, Nanjing Jiangsu 210003 (CN)
(74) Representative: Cabinet Beaumont
(86) International application number: PCT/CN2017/091906
(87) International publication number: WO 2019/006708

(56) References cited:
- EP-A1- 3 016 316
- WO-A1-2014/179923
- WO-A1-2015/105987
- WO-A1-2015/162619
- CN-A- 104 754 053
- CN-A- 105 553 768
- CN-A- 106 559 459
- US-A1- 2015 163 151
- YI-CHEN CHAN ET AL: "Fast Controller Failover for Multi-domain Software-Defined Networks", 2015 EUROPEAN CONFERENCE ON NETWORKS AND COMMUNICATIONS (EUCNC), IEEE, 29 June 2015 (2015-06-29), pages 370-374, XP033192794, DOI: 10.1109/EUCNC.2015.7194101 [retrieved on 2015-08-12]
- LI JIACONG ET AL: "Sharing data store and backup controllers for resilient control plane in multi-domain SDN", 2017 IFIP/IEEE SYMPOSIUM ON INTEGRATED NETWORK AND SERVICE MANAGEMENT (IM), IFIP, 8 May 2017 (2017-05-08), pages 476-482, XP033127598, DOI: 10.23919/INM.2017.7987315 [retrieved on 2017-07-20]

## Description

### TECHNICAL FIELD

The present application relates to the field of electric power communications, in specific to a software defined network (SDN) architecture applied to a data communication network of an electric power system, in particular to an SDN multi-domain network backup method and system based on a dual-port switch.

### BACKGROUND

A national power data communication network is a comprehensive wide area network transmission platform of the state grid corporation. In recent years, all networks and provincial companies of the state grid corporation have built data communication networks one after another, main coverage of the data communication networks includes power plant substations subordinate to power bureau companies directly under the networks and provincial companies. Most of these data networks are integrated service networks. Devices used in these networks are asynchronous transfer mode (ATM) devices. With implementation of the Three Gorges Dam Project, west-to-east power transmission project and the project of national electric power grids connection, a national optical fiber network is gradually formed. In 2009, the state grid corporation officially announced the "strong smart grid" plan, in which an information communication platform plays a support role, higher requirements for communication networks have been put forward. Under the trend that not only new services, but also traditional services have been fully IP-used, a power integrated data communication network will be an inevitable choice for constructing a next generation power communication network.

However, an existing data communication network of the state grid company uses a classic network communication architecture, software and hardware of a network communication device are closely integrated. A traditional architecture is already difficult to satisfy requirements on future development of the power communication network:
(1) each device in the network is controlled separately, the network lacks a global view and an overall control capability, which is unable to grasp an operation state of the network in real time and unable to realize a global scheduling of network resources, security of network information cannot be guaranteed, so utilization rate and reliability of the network resources are low.
(2) With expansion of an information network scale of the state grid company, services carried by the network are increased, the traditional communication network lacks a unified control plane, so operation and maintenance efficiency are low, more maintenance personnels are required, and it will take a long time to deploy a new service, which is difficult to satisfy development requirements of the company.

Compared with the traditional transmission network architecture, a software defined network (SDN) is a revolutionary change. A design concept of the SDN is to separate a control plane of the network from a data forwarding plane and to realize a programmable control. It separates the control function from a transmission device and the control function is moved into a logically independent control environment, that is, a network control system. The system may operate on a common server, and a user may directly perform control function programming at any time. Therefore, the control function is no longer limited in a device, either limited to programming and definition only by a manufacturer of the device. The SDN network truly realizes a centralized network control, which may be optimized through a software programmable method. It is an important development direction of a power system data center and a data network in future. However, in the traditional SDN network architecture, a single SDN controller is used to control several SDN switches. At this time, if a link between the SDN controller and a certain SDN switch fails or the SDN controller itself fails, which will lead to paralysis of part of the network system or even entire network system, and greatly affects reliability of the network system. Therefore, necessary improvements must be made to the SDN network to satisfy requirements of the power communication network. A technical literature YI-CHEN CHAN ET AL: "Fast Controller Failover for Multi-Domain Software-Defined Networks", 2015 EUROPEAN CONFERENCE ON NETWORKS AND COMMUNICATIONS (ENCNC), IEEE, 29 June 2015 (2015-06-29), pages 370-374, XP033192794 discloses a method called "circular failure detection mechanism" wherein each region comprises a master and a hot standby controller. When both controllers crash, all the switches in the region will be migrated to the hot standby controller in another domain selected based on a cost factor.

### SUMMARY

Technical problem: the technical problem to be solved by the present application is to propose a software defined network device and data communication method based on a dual-control-port switch using a redundant backup mechanism, so as to realize actual requirements on a high reliable data communication in the power industry and improve network survivability.

At the same time, it further provides a port selection method of a dual-port switch and dual-controllers, which effectively improves reliability of a data communication system.

Technical solution: in order to solve the above technical problem, the present application uses following technical solutions:
the present application provides an SDN multi-domain network backup method based on a dual-port switch, which is applied to a multi-domain SDN architecture having a redundant backup function, the method as claimed in independent Claim 1.

An SDN is divided into at least one region, where each region of the at least one region includes an SDN master controller, an SDN slave controller and an SDN switch; and a connection between adjacent regions of the at least one region is performed through at least one link established by the SDN switch, where each of the SDN master controller and the SDN slave controller in the each region is connected to an SDN main controller.

The present application further provides an SDN multi-domain network backup system based on a dual-port switch, the system includes a division unit and a control unit, the system as claimed in independent Claim 6.

The division unit is configured to divide an SDN into at least one region, where each region of the at least one region includes an SDN master controller, an SDN slave controller and an SDN switch; and
the control unit is configured to perform a connection between adjacent regions of the at least one region through at least one link established by the SDN switch, where each of the SDN master controller and the SDN slave controller in the each region is connected to an SDN main controller.

Beneficial effects: compared with existing arts, the technical solutions of the present application have following beneficial effects:
(1) In the present application, a connection between a dual-port switch and an SDN controller is designed and used. When one port or link fails, it may be switched to another port to complete communications with the SDN controller, thus the reliability of the system is improved.
(2) A cross-region redundant backup solution is designed and implemented to further improve survivability of the SDN network system.

### BRIEF DESCRIPTION OF DRAWINGS

FIG. 1 shows a cross-region SDN network architecture model.
FIG. 2 shows an SDN network model based on a dual-port controller.
FIG. 3 shows that when an SDN controller 1 and a switch 11 fail, the switch 11 is controlled by an SDN controller 2.
FIG. 4 shows that all SDN controllers in region 1 fail, switches in region 1 are controlled by an SDN slave controller 4 in region 2.

In these figures: an SDN master controller 1, an SDN slave controller 2, a network switch 3 and a network switch 4 are shown.

### DETAILED DESCRIPTION

The technical solutions of the present application will be described in detail below with reference to the drawings and embodiments.

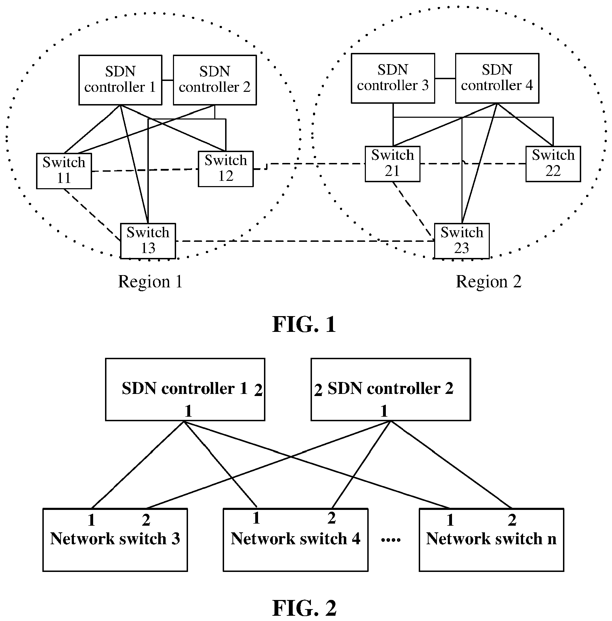

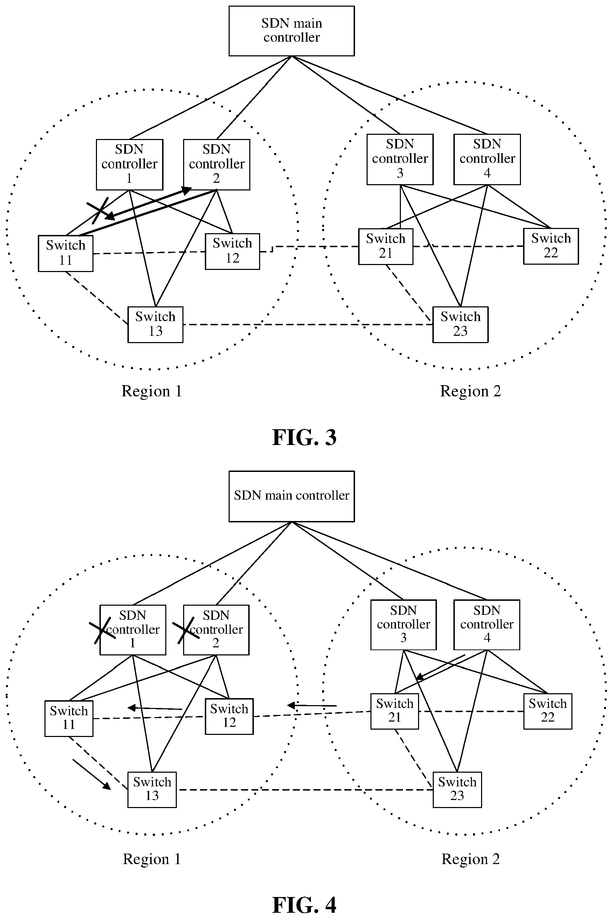

A software defined network (SDN) device has a redundant backup function, an SDN network is divided into multiple regions, each region of the multiple regions includes an SDN controller 1 serving as an SDN master controller, an SDN controller 2 serving as an SDN slave controller, multiple dual-port switches 3 and 4, a port 1 of the SDN controller 1 is connected to a port 1 of each of the dual-port switches 3 and 4, and a port 1 of the SDN controller 2 is connected to a port 2 of the each of the dual-port switches 3 and 4. The SDN main controller is respectively connected to each of the SDN master controller and the SDN slave controller in the each region. Referring specifically to FIG. 1 and FIG. 2, switches in FIG. 1 are responsible for message forwarding, controllers are responsible for determining a path of the message forwarding of these switches, the solid line is a control channel for the controller to control the switches, the dotted line is a data channel for the message forwarding of the switches, and the circular dotted line indicates an SDN network domain including controllers and switches; FIG. 2 is a logic diagram in a single domain. According to the present application, the backup method using the device includes following methods.
1) The SDN controller 1 serves as the SDN master controller, which is responsible for a control connection with each dual-port switch and monitors a link state between the SDN controller 1 and a port 1 of a switch. The SDN controller 2 serves as an SDN slave controller and backs up flow table information in the SDN controller 1 in real time. As shown in FIG. 3, when the SDN controller 1 serving as the SDN master controller finds that a link between the SDN controller 1 and a port of a switch 11 fails, the SDN controller 1 transmits a message to the SDN main controller, and the SDN main controller transmits an instruction to the SDN controller 2 in a region 1 to open a communication link between the SDN controller 2 (the SDN slave controller) and the switch 11 to implement control of the switch 11.
2) When the SDN controller 1 serving as the SDN master controller fails, the SDN controller 1 serving as the SDN master controller transmits information to the SDN main controller; the SDN main controller notifies the SDN controller 2 serving as the SDN slave controller. The SDN controller 2 serving as the SDN slave controller takes functions of the SDN master controller.
3) As shown in FIG. 4, when the SDN controller 1 in the region 1 serving as the SDN master controller and the SDN controller 2 serving as the SDN slave controller fail, the SDN main controller commands an SDN slave controller 4 in region 2 to communicate with a switch in the region 1 through a switch 21 in a region 2 to realize the cross-region switch control.
4) A redundant link backup manner is used between the region 1 and the region 2, when a cross-region link between a switch 12 in the region 1 and the switch 21 in the region 2 fails, the cross-region control may be realized through a cross-region link between a switch 13 in the region 1 and a switch 23 in the region 2.

Specifically, FIG. 3 shows an operation manner in a case of a link failure within a region; FIG. 4 shows an operation manner in a case of a control failure within a region. In the SDN architecture, communications of switches are completely controlled by a controller, therefore, if both controllers in the region 1 fail, switches in the region 1 will be out of control, at this time, a control right in the region 1 may be transferred to a slave controller in the region 2 via a link between the switch 12 and the switch 21 (or between the switch 13 and the switch 23), while the switch 12 with the switch 21 and the switch 13 with the switch 23 form a pair of cross-region control communication links, which are backup to each other. A physical link itself exists, and the control right of the region 1 is transferred to the region 2 when two controllers in region 1 fail is determined by a main controller of a top layer, the main controller may monitor states of controllers in each region in real time, when there is a control failure in the region 1, the main controller may directly transfer the control right of the region 1 to the region 2.

It should be understood that the above-mentioned embodiments are only used to illustrate specific embodiments of the technical solutions of the present application. The invention is defined in the appended independent claims.

## Claims

1. A software defined network, SDN, multi-domain network backup method based on a dual-port SDN switch, applied to a multi-domain SDN architecture having a redundant backup function, comprising
dividing an SDN into at least two domains, wherein each domain of the at least two domains comprises an SDN master controller, an SDN slave controller and at least one dual-port SDN switch; and
performing a connection between adjacent domains of the at least two domains through at least one link established by the at least one dual-port SDN switch, wherein each of the SDN master controller and the SDN slave controller in the each domain is connected to an SDN main controller;
**characterized in that**, the method further comprises: when a failure occurs in both the SDN master controller and the SDN slave controller in a first domain, connecting the at least one dual-port SDN switch in the first domain automatically to a dual-port SDN switch in a second domain to realize cross-domain control through the SDN slave controller in the second domain, and transferring control right of the first domain to the second domain by the SDN main controller.

2. The method according to claim 1, wherein the method further comprises:
connecting a port of the SDN master controller to a port of each of the at least one dual-port SDN switch and a port of the SDN slave controller to another port of the each of the at least one dual-port SDN switch.

3. The method according to claim 1 or 2, further comprising:
in a normal work state, controlling, by the SDN master controller, a connection with each of the at least one dual-port SDN switch, monitoring a link state between the SDN master controller and a port of the each of the at least one dual-port SDN switch; and backing up, by the SDN slave controller, flow table information from the SDN master controller in real time;
in response to finding by the SDN master controller a failure in a link between the SDN master controller and a port of a first dual-port SDN switch, switching to the SDN slave controller, and
using a link between a port of the SDN slave controller and another port of the first dual-port SDN switch having the link failure to realize delivery of control signaling.

4. The method according to claim 3, further comprising:
in response to finding by the SDN master controller the failure in the link,
transmitting, by the SDN master controller, link failure information to the SDN main controller;
transmitting, by the SDN main controller, an instruction to the SDN slave controller to open communication between the SDN slave controller and a port of the first dual-port SDN switch having the link failure; and
transmitting a flow table of the first dual-port SDN switch having the link failure to the SDN slave controller through a port of the SDN master controller and transmitting the flow table of the first dual-port SDN switch having the link failure to the port of the first dual-port SDN switch having the link failure through a redundant link.

5. The method according to claim 3, further comprising:
in response to determining that a failure occurs in the SDN master controller,
transmitting a controller failure message to the SDN main controller, notifying, by the SDN main controller, the SDN slave controller to perform functions of the SDN master controller; and
performing, by the SDN slave controller, the functions of the SDN master controller.

6. A software defined network, SDN, multi-domain network backup system based on a dual-port SDN switch, comprising:
a division unit, which is configured to divide an SDN into at least two domains, wherein each domain of the at least two domains comprises an SDN master controller, an SDN slave controller and at least one dual-port SDN switch; and
a control unit, which is configured to perform a connection between adjacent domains of the at least two domains through at least one link established by the at least one dual-port SDN switch,
wherein each of the SDN master controller and the SDN slave controller in the each domain is connected to an SDN main controller;
**characterized in that**, the at least one dual-port SDN switch is configured to: when a failure occurs in the SDN master controller and the SDN slave controller in a first domain, connect automatically to a second dual-port SDN switch in a second domain to realize cross-domain control through an SDN slave controller in the second domain;
wherein the SDN main controller is configured to transfer control right of the first domain to the second domain.

7. The system according to claim 6, wherein a port of the SDN master controller is connected to a port of each of the at least one dual-port SDN switch, and a port of the SDN slave controller is connected to another port of the each of the at least one dual-port SDN switch.

8. The system according to claim 6 or 7, wherein
the SDN master controller is configured to control a connection with each of the at least one dual-port SDN switch, and monitor a link state between the SDN master controller and a port of each of the at least one dual-port SDN switch;
wherein the SDN slave controller is configured to back up flow table information from the SDN master controller in real time;
wherein the SDN master controller is further configured to: in response to finding a failure in a link between the SDN master controller and a port of a first dual-port SDN switch , switch to the SDN slave controller, and
wherein the SDN slave controller is further configured to use a link between a port of the SDN slave controller and another port of the first dual-port SDN switch having the link failure to realize delivery of control signaling.

9. The system according to claim 8, wherein
the SDN master controller is configured to: in response to finding the failure in the link, transmit link failure information to the SDN main controller,
the SDN main controller is configured to transmit an instruction to the SDN slave controller to open communication between the SDN slave controller and a port of the first dual-port SDN switch having the link failure; and transmit a flow table of the first dual-port SDN switch having the link failure to the SDN slave controller through a port of the SDN master controller and transmit the flow table of the first dual-port SDN switch having the link failure to the port of the first dual-port SDN switch having the link failure through a redundant link.

10. The system according to claim 8, wherein
the SDN main controller is configured to: in response to determining that a failure occurs in the SDN master controller, receive a controller failure message transmitted by the SDN master controller, and notify the SDN slave controller to perform functions of the master controller; and
the SDN slave controller is configured to perform the functions of the master controller.

## Patentansprüche

1. Ein Software-definiertes Netzwerk, SDN, Mehrdomänen-Netzwerk-Backup-Verfahren, basierend auf einem Dual-Port-SDN-Switch, angewendet auf eine Mehrdomänen-SDN-Architektur mit einer redundanten Backup-Funktion, Folgendes aufweisend:
Aufteilen eines SDN in mindestens zwei Domänen, wobei jede Domäne der mindestens zwei Domänen einen SDN-Master-Controller, einen SDN-Slave-Controller und mindestens einen Dual-Port-SDN-Switch aufweist; und
Durchführen einer Verbindung zwischen benachbarten Domänen der mindestens zwei Domänen durch mindestens eine Verbindung, die durch den mindestens einen Dual-Port-SDN-Switch hergestellt wird, wobei sowohl der SDN-Master-Controller als auch der SDN-Slave-Controller in jeder Domäne mit einem SDN-Master-Controller verbunden ist;
**dadurch gekennzeichnet, dass** das Verfahren ferner aufweist: wenn ein Ausfall sowohl in dem SDN-Master-Controller als auch in dem SDN-Slave-Controller in einer ersten Domäne auftritt, automatisches Verbinden des mindestens einen Dual-Port-SDN-Switch in der ersten Domäne mit einem Dual-Port-SDN-Switch in einer zweiten Domäne, um eine domänenübergreifende Steuerung durch den SDN-Slave-Controller in der zweiten Domäne zu realisieren, und Übertragen des Steuerungsrechts der ersten Domäne auf die zweite Domäne durch den SDN-Master-Controller.

2. Verfahren nach Anspruch 1, wobei das Verfahren ferner aufweist:
Verbinden eines Ports des SDN-Master-Controllers mit einem Port jedes der mindestens einen Dual-Port-SDN-Switches und eines Ports des SDN-Slave-Controllers mit einem anderen Port jedes der mindestens einen Dual-Port-SDN-Switches.

3. Verfahren nach Anspruch 1 oder 2, wobei das Verfahren ferner aufweist:
in einem normalen Arbeitszustand, Steuern einer Verbindung mit jedem des mindestens einen Dual-Port-SDN-Switches durch den SDN-Master-Controller, Überwachen eines Verbindungszustands zwischen dem SDN-Master-Controller und einem Port jedes des mindestens einen Dual-Port-SDN-Switches; und Sichern von Flusstabelleninformationen vom SDN-Master-Controller in Echtzeit durch den SDN-Slave-Controller;
als Reaktion auf das Feststellen eines Fehlers in einer Verbindung zwischen dem SDN-Master-Controller und einem Port eines ersten Dual-Port-SDN-Switches durch den SDN-Master-Controller, Umschalten auf den SDN-Slave-Controller, und
Verwenden einer Verbindung zwischen einem Port des SDN-Slave-Controllers und einem anderen Port des ersten Dual-Port-SDN-Switches, der den Verbindungsfehler aufweist, um die Übermittlung von Steuersignalisierung zu realisieren.

4. Verfahren nach Anspruch 3, wobei das Verfahren weiterhin aufweist:
als Reaktion auf die Feststellung des Fehlers in der Verbindung durch den SDN-Master-Controller
Übertragen von Verbindungsfehlerinformationen durch den SDN-Master-Controller an den SDN-Haupt-Controller;
Übertragen, durch den SDN-Haupt-Controller, einer Anweisung an den SDN-Slave-Controller, um Kommunikation zwischen dem SDN-Slave-Controller und einem Port des Port-SDN-Switches zu öffnen, der ersten Dual-den Verbindungsausfall; und
Übertragen einer Flusstabelle des ersten Dual-Port-SDN-Switch mit dem Switches mit dem Verbindungsausfall an den SDN-Slave-Controller über einen Port des SDN-Master-Controllers an den SDN-Slave-Controller und Übertragen der Flow-Tabelle des ersten Dual-Port-SDN-Switch mit dem Verbindungsfehler an den Port des ersten Dual-Port-SDN-Switch mit dem Verbindungsausfall über eine redundanten Verbindung.

5. Verfahren nach Anspruch 3, wobei das Verfahren weiter Folgendes aufweist:
als Reaktion auf die Feststellung, dass ein Fehler im SDN-Master-Controller auftritt, Übertragen einer Controller-Fehlermeldung an den SDN-Haupt-Controller,
Benachrichtigen des SDN-Slave-Controllers durch den SDN-Haupt-Controller, Funktionen des SDN-Master-Controllers auszuführen; und
Ausführen der Funktionen des SDN-Master-Controllers durch den SDN-Slave-Controller.

6. Ein Software-definiertes Netzwerk, SDN, Multi-Domain-Netzwerk-Backup-System, basierend auf einem Dual-Port-SDN-Switch, Folgendes aufweisend:
eine Teilungseinheit, die so konfiguriert ist, dass sie ein SDN in mindestens zwei Domänen unterteilt, wobei jede Domäne der mindestens zwei Domänen einen SDN-Master-Controller, einen SDN-Slave-Controller und mindestens einen Dual-Port-SDN-Switch aufweist; und
eine Steuereinheit, die so konfiguriert ist, dass sie eine Verbindung zwischen benachbarten Domänen der mindestens zwei Domänen über mindestens eine von dem mindestens einen Dual-Port-SDN-Switch hergestellte Verbindung herstellt,
wobei sowohl der SDN-Master-Controller als auch der SDN-Slave-Controller in jeder Domäne mit einem SDN-Haupt-Controller verbunden ist;
**dadurch gekennzeichnet, dass** der mindestens eine Dual-Port-SDN-Switch Switch so konfiguriert ist, dass er bei Auftreten eines Fehlers in dem SDN-Master-Controller und dem SDN-Slave-Controller in einer ersten Domäne, automatisch mit einem zweiten Dual-Port-SDN-Switch in einer zweiten Domäne verbindet, um eine domänenübergreifende Steuerung durch einen SDN-Slave-Controller in der zweiten Domäne realisiert;
wobei der SDN-Haupt-Controller so konfiguriert ist, dass er das Kontrollrecht der ersten Domäne an die zweite Domäne überträgt.

7. System nach Anspruch 6,
wobei ein Port des SDN-Master-Controllers mit einem Port von jedem der mindestens einen Dual-Port-SDN Switches verbunden ist, und ein Port des SDN-Slave-Controllers mit einem anderen Port jedes des mindestens einen Dual-Port-SDN-Switches verbunden ist.

8. System nach Anspruch 6 oder 7, wobei
der SDN-Master-Controller so konfiguriert ist, dass er eine Verbindung mit jedem der mindestens einen einem Dual-Port-SDN Switch steuert und einen Verbindungszustand zwischen dem SDN-Master-Controller und einem Port von jedem des mindestens einen Dual-Port-SDN-Switches überwacht; wobei der SDN-Slave-Controller so konfiguriert ist, dass er Flow-Table-Informationen von dem SDN-Master-Controller in Echtzeit sichert; und SDN-Master-Controller in Echtzeit sichert;
wobei der SDN-Master-Controller ferner konfiguriert ist, um: als Reaktion auf das Feststellen eines Fehlers in einer Verbindung zwischen dem SDN-Master-Controller und einem Port eines ersten Dual-Port-SDN-Switch auf den SDN-Slave-Controller umzuschalten, und
wobei der SDN-Slave-Controller ferner so konfiguriert ist, dass er eine Verbindung zwischen einem Port des SDN-Slave-Controllers und einem anderen Port des ersten Dual-Port-SDN-Switch mit dem Ausfall der Verbindung zu nutzen, um die Übermittlung von Steuersignalisierung realisiert.

9. System nach Anspruch 8, wobei
der SDN-Master-Controller so konfiguriert ist, dass er: als Reaktion auf die Feststellung des Fehlers in der Verbindung Verbindungsfehlerinformation an den SDN-Haupt-Controller überträgt,
der SDN-Haupt-Controller so konfiguriert ist, dass er eine Anweisung an den SDN-Slave-Controller überträgt, um die Kommunikation zwischen dem SDN-Slave-Controller und einem Port des ersten Dual-Port-SDN-Switch, der den Verbindungsfehler aufweist, zu öffnen; und Übertragen einer Flow-Tabelle des ersten Dual-Port-SDN-Switch mit dem Verbindungsfehler an den SDN-Slave-Controller durch einen Port des SDN-Master-Controllers und Übertragen der Flow-Tabelle des ersten Dual-Port-SDN-Switch mit dem Verbindungsfehler an den Port des ersten Dual-Port-SDN-Switch mit dem Verbindungsausfall über eine redundante Verbindung.

10. System nach Anspruch 8, wobei
der SDN-Haupt-Controller so konfiguriert ist, dass er: als Reaktion auf die Feststellung, dass ein Fehler im SDN-Mastercontroller auftritt, eine vom SDN-Mastercontroller übertragene Controller-Fehlermeldung empfängt und den SDN-Slave-Controller benachrichtigt, Funktionen des Mastercontrollers auszuführen; und
der SDN-Slave-Controller so konfiguriert ist, dass er die Funktionen des Master-Controllers ausführt.

## Revendications

1. Procédé de sauvegarde de réseau multidomaine de réseau défini par un logiciel, SDN, basé sur un commutateur SDN à double port, appliqué à une architecture SDN multidomaine ayant une fonction de sauvegarde redondante, comprenant :
la division d'un SDN en au moins deux domaines, dans lequel chaque domaine des au moins deux domaines comprend un contrôleur maître SDN, un contrôleur esclave SDN et au moins un commutateur SDN à double port ; et
l'exécution d'une connexion entre des domaines adjacents des au moins deux domaines au moyen d'au moins une liaison établie par l'au moins un commutateur SDN à double port, dans lequel chacun parmi le contrôleur maître SDN et le contrôleur esclave SDN dans chaque domaine est connecté à un contrôleur principal SDN ;
**caractérisé en ce que**, le procédé comprend en outre : lorsqu'une défaillance apparaît à la fois dans le contrôleur maître SDN et le contrôleur esclave SDN dans un premier domaine, la connexion de l'au moins un commutateur SDN à double port dans le premier domaine automatiquement à un commutateur SDN à double port dans un deuxième domaine pour effectuer une commande à domaine croisé au moyen du contrôleur esclave SDN dans le deuxième domaine, et le transfert de la commande directement depuis le premier domaine au deuxième domaine par le contrôleur principal SDN.

2. Procédé selon la revendication 1, dans lequel le procédé comprend en outre :
la connexion d'un port du contrôleur maître SDN à un port de chacun de l'au moins un commutateur SDN à double port et un port du contrôleur esclave SDN à l'autre port de chacun de l'au moins un commutateur SDN à double port.

3. Procédé selon la revendication 1 ou 2, comprenant en outre :
dans un état de fonctionnement normal, la commande, par le contrôleur maître SDN, d'une connexion avec chacun de l'au moins un commutateur SDN à deux ports, la surveillance d'un état de liaison entre le contrôleur maître SDN et un port de chacun de l'au moins un commutateur SDN à deux ports ; et la sauvegarde, par le contrôleur esclave SDN, des informations de table de flux provenant du contrôleur maître SDN en temps réel ;
en réponse à la découverte par le contrôleur maître SDN d'une défaillance dans une liaison entre le contrôleur maître SDN et un port d'un premier commutateur SDN à double port, la commutation vers le contrôleur esclave SDN, et l'utilisation d'une liaison entre un port du contrôleur esclave SDN et un autre port du premier commutateur SDN à double port ayant la défaillance de liaison pour effectuer la fourniture d'une signalisation de commande.

4. Procédé selon la revendication 3, comprenant en outre :
en réponse à la découverte par le contrôleur maître SDN de la défaillance dans la liaison,
la transmission, par le contrôleur maître SDN, d'informations de défaillance de liaison au contrôleur principal SDN ;
la transmission, par le contrôleur principal SDN, d'une instruction au contrôleur esclave SDN pour ouvrir une communication entre le contrôleur esclave SDN et un port du premier commutateur SDN à double port ayant la défaillance de liaison ; et
la transmission d'une table de flux du premier commutateur SDN à double port ayant la défaillance de liaison au contrôleur esclave SDN au moyen d'un port du contrôleur maître SDN et la transmission de la table de flux du premier commutateur SDN à double port ayant la défaillance de liaison au premier commutateur SDN à double port ayant la défaillance de liaison au moyen d'une liaison redondante.

5. Procédé selon la revendication 3, comprenant en outre :
en réponse à la détermination qu'une défaillance survient dans le contrôleur maître SDN,
la transmission d'un message de défaillance de contrôleur au contrôleur principal SDN,
la notification, par le contrôleur principal SDN, au contrôleur esclave SDN d'exécuter des fonctions du contrôleur maître SDN ; et
l'exécution, par le contrôleur esclave SDN, des fonctions du contrôleur maître SDN.

6. Système de sauvegarde de réseau multi-domaine de réseau défini par un logiciel, SDN, basé sur un commutateur SDN à double port, comprenant :
une unité de division qui est configurée pour diviser un SDN en au moins deux domaines, dans lequel chaque domaine des au moins deux domaines comprend un contrôleur maître SDN, un contrôleur esclave SDN et au moins un commutateur SDN à double port ; et
une unité de commande, qui est configurée pour exécuter une connexion entre des domaines adjacents des au moins deux domaines au moyen d'au moins une liaison établie par l'au moins un commutateur SDN à double port,
dans lequel chacun parmi le contrôleur maître SDN et le contrôleur esclave SDN dans chaque domaine est connecté à un contrôleur principal SDN ;
**caractérisé en ce que** l'au moins un commutateur SDN à double port est configuré pour : lorsqu'une défaillance apparaît dans le contrôleur maître SDN et le contrôleur esclave SDN dans un premier domaine, se connecter automatiquement à un deuxième commutateur SDN à double port dans un deuxième domaine pour effectuer une commande à domaine croisé au moyen du contrôleur esclave SDN dans le deuxième domaine ;
dans lequel le contrôleur principal SDN est configuré pour transférer la commande directement depuis le premier domaine au deuxième domaine.

7. Système selon la revendication 6, dans lequel un port du contrôleur maître SDN est connecté à un port de chacun de l'au moins un commutateur SDN à double port et un port du contrôleur esclave SDN est connecté à l'autre port de chacun de l'au moins un commutateur à double port.

8. Système selon la revendication 6 ou 7, dans lequel
le contrôleur maître SDN est configuré pour commander une connexion avec chacun de l'au moins un commutateur SDN à deux ports, et pour surveiller un état de liaison entre le contrôleur maître SDN et un port de chacun de l'au moins un commutateur SDN à deux ports ;
dans lequel le contrôleur esclave SDN est configuré pour sauvegarder des informations de table de flux provenant du contrôleur maître SDN en temps réel ;
dans lequel le contrôleur maître SDN est en outre configuré pour : en réponse à la découverte d'une défaillance dans une liaison entre le contrôleur maître SDN et un port d'un premier commutateur SDN à double port, commuter vers le contrôleur esclave SDN, et
dans lequel le contrôleur esclave SDN est en outre configuré pour utiliser une liaison entre un port du contrôleur esclave SDN et un autre port du premier commutateur SDN à double port ayant la défaillance de liaison pour effectuer la fourniture d'une signalisation de commande.

9. Système selon la revendication 8, dans lequel
le contrôleur maître SDN est configuré pour : en réponse à la découverte de la défaillance dans la liaison, transmettre des informations de défaillance de liaison au contrôleur principal SDN ;
le contrôleur principal SDN est configuré pour transmettre une instruction au contrôleur esclave SDN pour ouvrir une communication entre le contrôleur esclave SDN et un port du premier commutateur SDN à double port ayant la défaillance de liaison ; et transmettre une table de flux du premier commutateur SDN à double port ayant la défaillance de liaison au contrôleur esclave SDN au moyen d'un port du contrôleur maître SDN et transmettre la table de flux du premier commutateur SDN à double port ayant la défaillance de liaison au port du premier commutateur SDN à double port ayant la défaillance de liaison au moyen d'une liaison redondante.

10. Système selon la revendication 8, dans lequel
le contrôleur principal SDN est configuré pour : en réponse à la détermination qu'une défaillance survient dans le contrôleur maître SDN, recevoir un message de défaillance de contrôleur transmis par le contrôleur maître SDN, et notifier au contrôleur esclave SDN d'exécuter des fonctions du contrôleur maître SDN ; et
le contrôleur esclave SDN est configuré pour exécuter des fonctions du contrôleur maître SDN.
